# EUROPEAN PATENT APPLICATION

(11) **EP 3 406 496 A1**
(43) Date of publication of application: **28.11.2018**
(21) Application number: 18173539.0
(22) Date of filing: 22.05.2018
(51) Int. Cl.: B60T 7/20, B60D 1/24

(54) **VEHICLE TOWING AND PUSHING PARKING BRAKE MANAGEMENT MECHANISM**

(30) Priority: 24.05.2017 SI 201700144
(71) Applicant: Tips d.o.o., 8273 Leskovec pri Krshem (SI)
(72) Inventor: Sneberger, Silvo, 8250 Brezice (SI); Pustavrh, Robert, 8273 Leskovec pri Krskem (SI); Smole, Marjan, 3257 Podsreda (SI)
(74) Representative: Flak, Antonija

(57) **Abstract**

The invention is classified as a vehicle towing parking brake management mechanism in the field of workflows and transport.

The vehicle towing and pushing parking brake management mechanism with the construction of individual functional lots allows release of the parking brake on the basis of the pull or push of the towing device, which triggers functioning of the mechanism that changes the state of the parking brake from active to inactive and vice-versa. Therefore, the brake stays activated upon the coupling to the towing vehicle until the input of the force of towing or pushing which significantly increases safety when working with the vehicle. Given the initial movement of the towing device (3) in the axial direction, the mechanism (4), through the pull or release of the coupling (6), directly changes the state of the parking brake from active to inactive. A part of the mechanism (4) is also bolt (7) determines the state of the parking brake with three different positions with regard to the lock-down (2). Various positions of the bolt (7) are neutral, position of the first movement forward and the position of the first reverse movement. In the last two positions, it is locked by the integrated lockout (2) upon the first movement of the towed vehicle, leaving the parking brake deactivated. The reactivation of the brake is possible with the lift of the lockout (2).

## Description

### Field of the invention

The invention is classified as a vehicle towing parking brake management mechanism in the field of workflows and transport.

### The technical problem

Towing occurs under various circumstances with different vehicles. With trailers, towing is the basic manner of movement, whereas with vehicles with self-propulsion, it is mainly used under extraordinary circumstances that occur e.g. in case of a vehicle break down. Both trailers and vehicles with self-propulsion have a parking brake that is used for the protection of the vehicle against uncontrolled movements on a parking space. The familiar parking brake management systems require direct intervention by the operator that must deactivate the parking brake before towing and reactivate it after the towing is completed. If one of the anticipated activities does not occur, this can lead to negative effects for the vehicle being towed, for the towing vehicle, the operator or the surroundings.
In case of towing with an activated parking brake, greater wear or even complete blockage of the parking brake occurs, which causes destruction of the basic safety feature of the vehicle. Greater wear of the bearing surfaces and other components occurs with both, the vehicle being towed and the towing vehicle, and as a result, more maintenance is required. Consequently, the steerability of the vehicles is poorer, which can lead to damage to the vehicle and the surroundings that would have otherwise been avoided. There are greater workloads of the structural parts, especially the towing ore and the chassis components. The towing vehicle consumes more energy.

An uncontrolled movement of the vehicle due to the inactivated parking brake may lead to damage to people, goods, equipment and/or infrastructure.

The applicant's vehicles, the towed passenger stairs to be used at an airport, have a negative parking brake installed in them, which means that the brake is essentially active and the user then deactivates it. The brake is activated with a wire rope with the force created by a spring. Before driving, the force of the spring must be overcome and, thus, the brake deactivated. The user can achieve this by using the handle in the towing ore position or hydraulically from the control position through the parking brake cylinder. After driving, the parking brake is reactivated in the same manner. A towing ore with a standard coupling is installed in the vehicles with which the wheels on the first axis are steered during towing via mechanical connections. When not functioning, the towing ore is set in a vertical position.

The present invention solves the technical problem with the design of a mechanism that allows the release of the brake without the operator's intervention in the system, whereas the decision as to where and how to release the brake depends on the preset positions of the mechanism itself.

### State of the art

Patent US6543790B2 discloses a towing bar that is used for the towing of airplanes with a towing tractor. It is attached to the front airplane wheel. The solution is not connected to the airplane parking brake, the management of which is carried out separately from the towing system.

Patents SU783083, GB1384139, FR2259731, DE2852277 and DE2544500disclose various implementations of the overrun brake or manners of balancing the braking effect of the working brake of a trailer with the purpose of even driving.

The patents DE2554679 and DE2529262 describe the implementation of the restriction of movement around the axis of the clamping of the trailer. In this manner, the dangerous oscillation of the trailer is prevented that can occur at greater speed in case of an inappropriate distribution of weight of the trailer.

Document ITVR930017A1 discloses a trailer parking brake management with the towing bar that is mostly used with trolleys for the transport of luggage. The wheel is provided with a brake that is deactivated via the mechanism with the lowering of the ore from the vertical to the horizontal position. Upon detachment of the trailer, the brake is activated due to the force of the spring and the ore automatically returns to the vertical position. When working on a slope, problems may occur due to the brake deactivation prior to the coupling of the trailer. In a given situation, an operator is present between the trailer and the towing vehicle, so that the trailer may squeeze against the towing vehicle in case of a sudden movement and thereby cause severe injuries thereto. The ore must also be in a horizontal position in cases of manual movements of trolleys which means more difficult steering and poorer overview of the surroundings due to the necessary bending of the operator towards the tow bar and consequently, a poor ergonomic position.

Patent DE19848733 describes a lock-down management system on the automatic gearbox of the vehicles with self-propulsion that performs the function of a parking brake. The system is intended for deactivation of the lock-down in extraordinary cases which is why the lock-down is normally active at first. It is deactivated with a pull of the towing eye that is connected to the lever on the gearbox with a steel rope. It is maintained in this position by the spring latch that is unlocked after towing with a rotation of the towing eye which reactivates the brake on the gearbox. The deactivation of the lock-down only occurs with the towing of a trailer, but not in the case of pushing which is why the vehicle must always be towed in order to perform the deactivation of the lock-down. With regard to the connection between the towing vehicle and the trailer, it is not recommended to use torsional rigid towing bars as these would transfer the torsional forces onto the trailer and the lock-down could be reactivated during towing.

The great majority of the solutions that connect the brake system to towing is used to control the functioning of the working brake with trailers during driving. The last two of the above-mentioned patents affect the state of the parking brake of the vehicles during towing, however, they differ from the present invention in the essential aspects that have already been stated in the description of the individual patent.

### Description of the invention

The vehicle towing and pushing parking brake management mechanism with the construction of individual functional lots allows the release of the parking brake on the basis of the pull or push of the towing device, which triggers functioning of the mechanism that changes the state of the parking brake from active to inactive and vice-versa. Therefore, the brake stays activated upon the coupling to the towing vehicle until the input of the force of towing or pushing, which significantly increases safety during vehicle operation.

The mechanism allows the management of the functioning of the parking brake or device with equal function with the scope of actions, the performance of which is necessary during vehicle towing or pushing. The devices with the function equal to the parking brake are the scope of parts that, when active, prevent vehicle movement, e.g. the lock-down on the gearbox. In the continuance of the description below, the term "parking brake" is used for all devices.

Parking brake management is performed with the mechanism that is designed in such manner that it is only the movement of the towing vehicle that triggers deactivation of the negative parking brake, which eases working on slopes and protects the operator, other present persons and the vehicle against injuries or damage during the coupling process. The initial vehicle movement thereby may be driving forward or in reverse. The parking brake may be reactivated before or after the detachment of the vehicle.

Given the initial movement of the towing device 3 in the axial direction, the mechanism 4, through the pull or release of the coupling 6, directly changes the state of the parking brake from active to inactive. A part of the mechanism 4 is also bolt 7 that determines the state of the parking brake with three different positions with regard to the lock-down 2. The various positions of the bolt 7 are neutral, position of the first movement forward and the position of the first reverse movement. In the last two positions, it is locked by the integrated lockout 2 upon the first movement of the towed vehicle, leaving the parking brake deactivated. The reactivation of the brake is possible with the lift of the lockout 2.

The parking brake management mechanism under the invention will be described below in further detail based on an embodiment and figures, which depict:
- Figure 1: a towing vehicle, operator and passenger stairs with the towing bar
- Figure 2: diagram of the mechanism in neutral position
- Figure 3: diagram of the mechanism in the first movement forward
- Figure 4: diagram of the mechanism in the first reverse movement
- Figure 5: diagram of the mechanism with a towing coupling
- Figure 6: diagram of the mechanism with a towing eye
- Figure 7: the composition with a towing bar in a vertical, neutral position
- Figure 8: explosion view of the composition
- Figure 9: the mechanism within the housing in neutral position and with the lowered bar

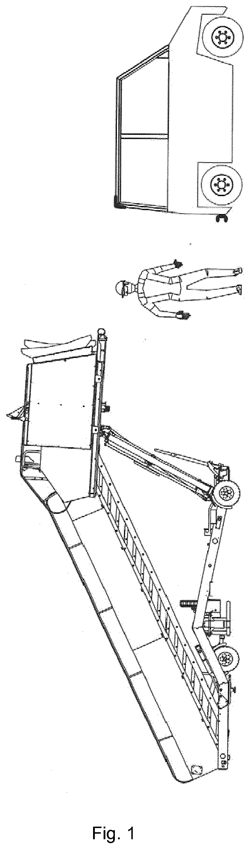

Figure 1 depicts the towing vehicle, operator and passenger stairs with the towing ore. As the operator is situated between the towed and towing vehicle during the process of the coupling of the towed vehicle, the parking brake must be active in order to ensure the safety of the operator, other present persons and the vehicles. Upon towing or pushing, the mechanism under the invention triggers deactivation of the parking brake. During the detachment process, the operator is again situated between the vehicles, which is why the parking brake may be reactivated already before detachment.

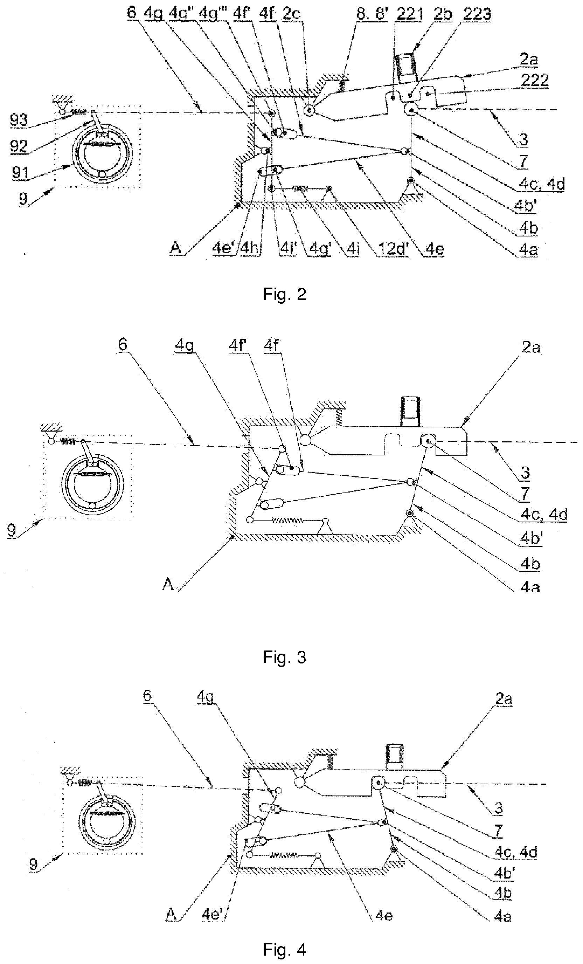

The parking brake with which vehicle movements are prevented when the vehicle is unsupervised on a parking space, is usually active during towing and is also supposed to be in an active state after towing. As the present invention is used for the deactivation of a parking brake during towing and its reactivation after towing, the functioning of the invention is, from the perspective of the parking brake, negative. The negative parking brake 9 is depicted in figures 2, 3, 4, 5 and 6 in diagrams as a drum brake 91 that is kept in an active state by a tensile spring 93 that is applied to its management mechanism 92.

The towing device 3 is, when connected to the towed and towing vehicle, axially movable, connected with the bolt 7, which it moves upon its own movement that is caused by the towing vehicle. The bolt 7 is an integral part of the mechanism 4 that is also comprised of interconnected handles 4b, 4c, 4d, 4e, 4f and 4g, shaft 4a and axes 4b', 4g', 4g" and 4h. The assembled mechanism is installed on the chassis of the vehicle or on a special housing as depicted in diagrams shown in figures 2, 3, 4, 5 and 6 as backing A. The shaft 4a and the axis 4h are embedded onto the backing A or the vehicle chassis or special housing in such manner that their geometrical axes are parallel. Handles 4c and 4d are fixed to the shaft 4a that are connected by the bolt 7 in the upper part. The handle 4b is also fixed to the shaft 4a. In the implementation example, the shaft 4a is a grooved shaft, whereas the handles 4b, 4c and 4d have appropriate grooved sleeves, which allow the transfer of the rotation from the handles 4c and 4d across the shaft 4a onto the handle 4b. In order to ensure the transfer of rotation, the handles may otherwise be connected to the shaft in various forms or with various mechanical connections. Through the axis 4b', handles 4e and 4f are fixed onto the handle 4b, whereby the two are also connected with the handle 4g through the axis 4g' or 4g". The handle 4g is installed on axis 4h, whereas axes 4g' and 4g" are on different sides of the axis 4h. The handles 4e and 4f are provided on the fittings with the axes 4g' and 4g" with elongated excisions 4e' and 4f', that allow one of them to cause rotation of the handle 4g, while the other tolerates rotation. The geometry created in such manner allows that, regardless of the direction of the movement of the bolt 7, the handle 4g always rotates around the axis 4h in the same direction. The tensile spring 4i that puts the mechanism back into neutral position is fixed onto the hole 4i' of the handle 4g. Onto the hole 4g"' of the handle 4g, the connection 6 is fixed that connects the mechanism 4 with the management mechanism 92 of the parking brake 9. Preferably, the connection 6 is a wire rope.

The parking brake management mechanism for towed vehicles according to the invention includes the mechanism 4, lockout 2, towing device 3, device with the function of a parking brake 9 and connection 6, where the towing device 3 and lockout 2 are directly connected to the mechanism 4 and the device with the function of a parking brake 9 is connected to the mechanism 4 through the connection 6. In this situation, the shaft 4a and the axis 4h of the mechanism 4 and the axis 2c of the lockout 2 are embedded on the housing 1 or on a stationary part of the towed vehicle in such manner that their axes are parallel to each other, whereby in the mechanism 4 that is comprised of the connected handles 4b, 4c, 4d, 4e, 4f, 4g, shaft 4a, axes 2c, 4b', 4g', 4g", 4h and bolt 7, the movement of the bolt 7 is transferred onto the axis 4b' and from there on the handles 4e and 4f and handle 4g. The geometry created by the handles 4e, 4f, 4g, with axes 4g' and 4g" that are located each on their own side of the axis 4h on the handle 4g, with the elongated excisions 4e' and 4f' on handles 4e and 4f on which axes 4g' and 4g" move, allows the same direction of the rotation of the handle 4g around the axis 4h, regardless of the movement direction of the bolt 7.

The lockout 2 is comprised of the lockout block 2a, handle 2b to lift the block 2a, two parallel limiters 2d that prevent the movement of the bolt 7 out of the lockout field of the block 2, and the axis 2c that is installed through the bore 21 of the block 2a. The block 2a is embedded on the backing A or the vehicle chassis or special housing in such manner that its axis 2c is parallel with axes of the shaft 4a and axis 4h. On the block 2a, two identical lockout grooves 221 and 222 are made that are split by the tooth 223. During towing or pushing, bolt 7 is set into the groove 221 or groove 222, which causes the mechanism 4 to lock which maintains the deactivated parking brake 9 (see figures 2, 3 and 4). This is additionally supported by two pressure springs 8 and 8' that are installed between the lockout block 2a and backing A or the vehicle chassis or special housing, and that push the block 2a downwards so that the bolt 7 does not move from the current grasp of the groove until the block 2a is again lifted.

When the vehicle in not being used, the mechanism 4 is in neutral position where it is kept by the spring 4i, whereby the lockout 2 is lifted and the block 2a with the tooth 223 leans on the bolt 7 (figure 2). Parking brake 9 is activated. For towing, the vehicle must be connected through the towing device 3 with the towing vehicle. During the coupling process, the parking brake 9 remains activated. The initial direction of the movement of the vehicles determines the functioning of the mechanism 4. Below, the functioning with the initial vehicle movement forward is described first, and reverse movement thereafter.

The towing vehicle moves in the forward driving direction and pulls behind it the towing device 3 and the bolt 7. Since the bolt 7 is embedded between the handles 4c and 4d that are installed onto the shaft 4a, it first oscillates around the geometrical axis of the shaft 4a, until the lockout block 2a lowers and catches on the bolt 7 in the frontal lockout groove 222. The oscillation of the handles 4c and 4d is transferred over the shaft 4a onto the handle 4b that oscillates in the same angle in the same direction as the handles 4c and 4d. In this movement, it pulls behind itself onto the handle 4b' through the axis 4b' the connected handles 4e and 4f. The handle 4f that is embedded onto the handle 4g above the axis 4h pulls the handle 4g so that the latter oscillates around the axis 4h which is not obstructed by the handle 4e, as the axis 4g' moves freely across the excision 4e'. During the oscillation, the handle 4g strains the tensile spring 4i and pulls the connection 6 that moves the lever on the parking brake 9 and thereby deactivates the brake. The bolt 7 remains caught in the groove 222, whereby it keeps the entire mechanism 4 in the described final position, and the brake 9 in a deactivated state until it is released with the lift of the brake block 2a. The movement of vehicles is enabled in any driving direction, both forward and reverse. The final state is depicted by figure 3.

If the towing vehicle first moves in the reverse driving direction, it pushes the towing device 3 and the bolt 7. Since the bolt 7 is embedded between the handles 4c and 4d through which the shaft 4a is also embedded in the bottom part, it first oscillates around the axis of the shaft 4a, until the lockout block 2a lowers and catches on the bolt 7 in the lockout groove 221. The oscillation of the handles 4c and 4d is transferred over the shaft 4a onto the handle 4b that oscillates in the same angle in the same direction as the handles 4c and 4d. In this situation, it pushes the handle 4b over the axis 4b' the connected handles 4e and 4f. The handle 4e that is embedded onto the handle 4g under the axis 4h pushes the handle 4g so that the latter oscillates around the axis 4h which is not obstructed by the handle 4e, as the axis 4g' moves freely across the excision 4e'. During the push of the vehicle, the handle 4g oscillates in the same direction as during towing. During the oscillation, the handle 4g strains the tensile spring 4i and pulls the connection 6 that moves the lever on the parking brake 9 and thereby deactivates the brake. The bolt 7 remains caught in the groove 221, whereby it keeps the entire mechanism 4 in the described final position, until it is released with the lifting of the brake block 2a. The brake 9 remains deactivated and the movement of vehicles is enabled in any driving direction, both forward and reverse. The final state is depicted by figure 4.

During the detachment of the towed vehicle from the towing vehicle, the parking brake management mechanism needs to be released, which is carried out with the lifting of the lockout block 2a. This allows the tensile spring 4i to return the entire mechanism 4, including the bolt 7 and the towing device 3, to neutral position. The connection 6 is thereby released, and it no longer affects the parking brake 9 which may return to its basic, activated state where it again prevents uncontrolled movements of the stairs. The lockout block 2a is lifted with the handle 2b. Upon the movement of the bolt 7 in neutral position, it moves under the tooth 223 of the block 2a and holds it in a lifted position.

The mechanism under the invention may have a device with the function of a parking brake 9 that may be a parking brake or a set of components with the function of a parking brake that is active in an unstrained state and has an integrated mechanism for deactivation that is set off by the connection 6.

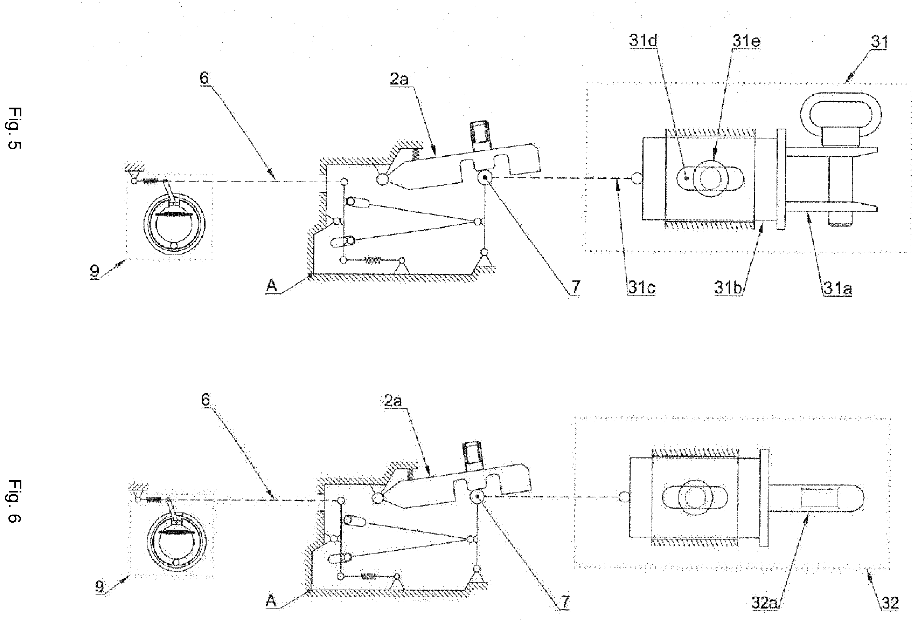

The mechanism according the invention may have various implementations of the towing device 3 that is used for the coupling of the towed and towing vehicle and transfers the initial movement of the towed vehicle onto the bolt 7 of the mechanism 4. Figure 5 depicts a diagram displacing the composition of a towing device 31 with the towing coupling 31a that is installed on the linear movable carrier 31b. The latter is connected to the bolt 7 with the mechanical connection 31c, and its movement is additionally secured with the bolt 31e that moves over the groove 31d. Figure 6 depicts a diagram displacing the composition 32 with the towing eye 32a that functions in accordance with the same principle. Both implementations are especially suitable for use with vehicles with self-propulsion.

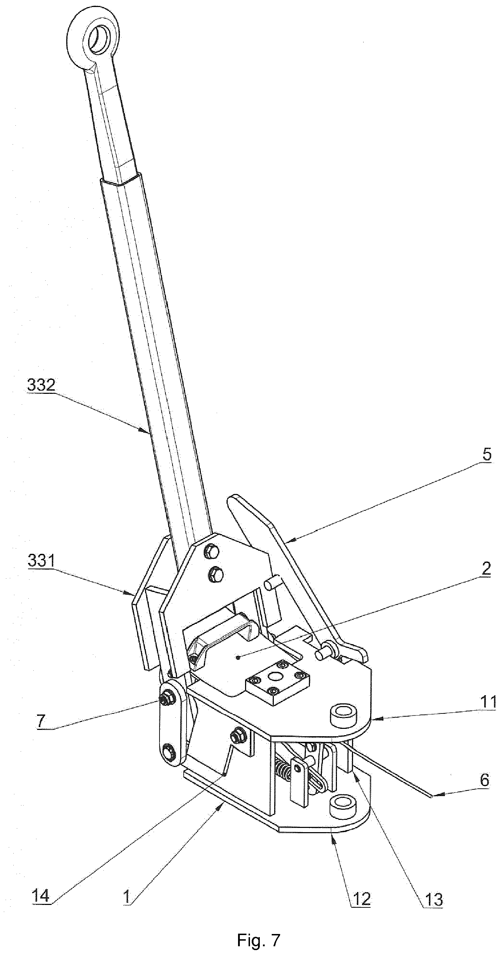

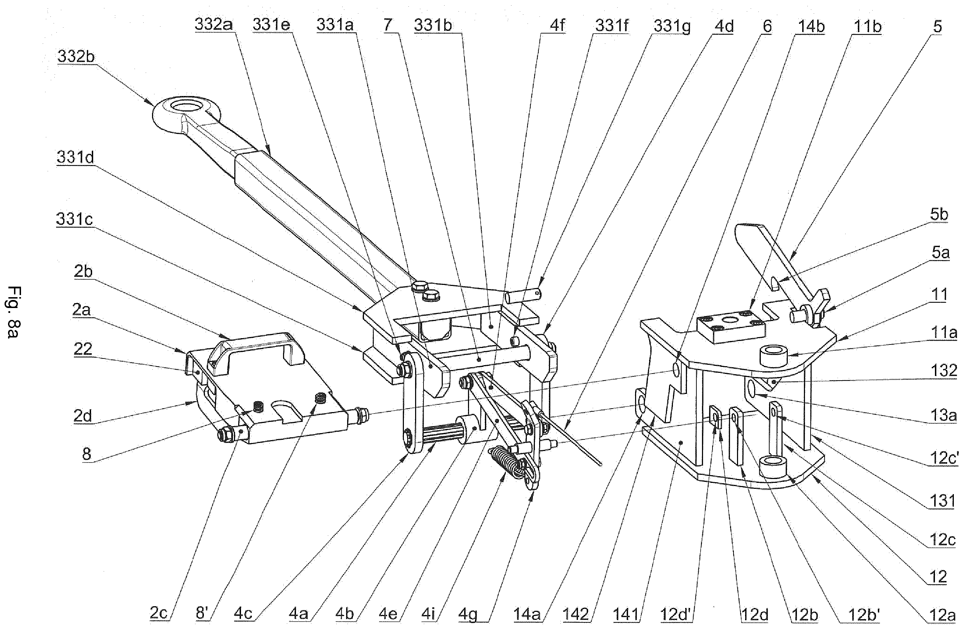

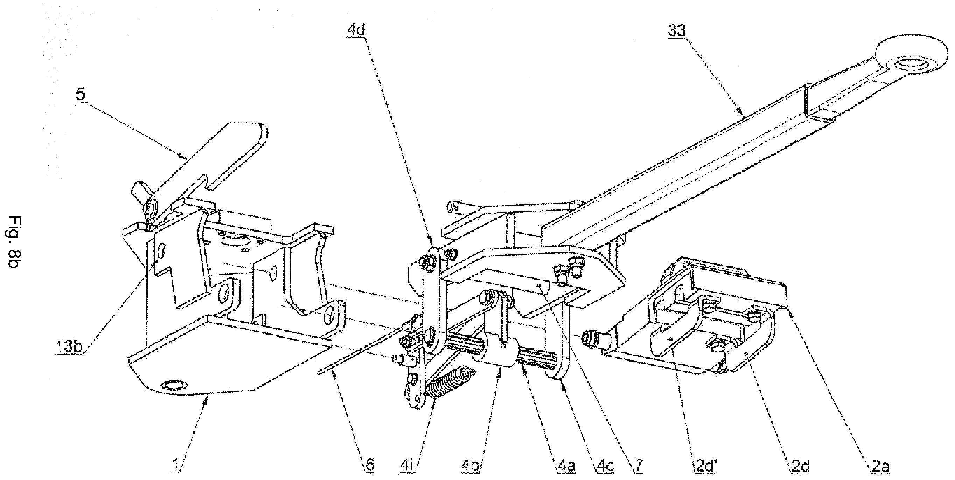

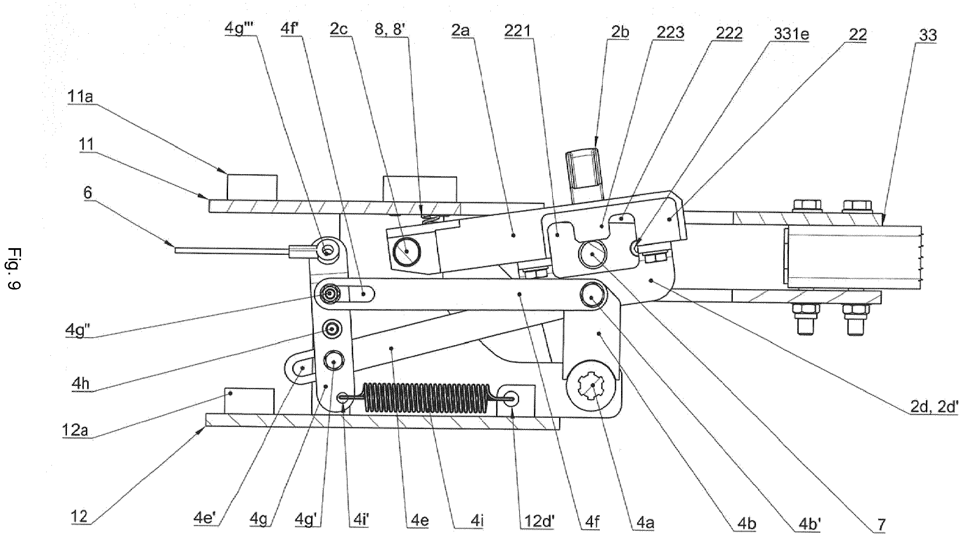

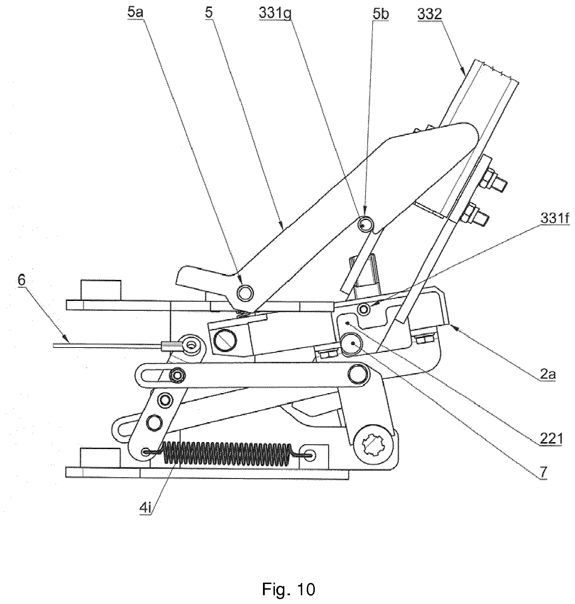

Below, the parking brake management mechanism under the invention is described, where the towing bar 33 acts as a towing device 3. The mechanism is installed in the housing 1 that is embedded in a rotating manner onto the vehicle chassis and is suitable for the application to trailers where the ore 33 is also used for the steering of the trailer. In figure 7, the implementation example is depicted with the lifted towing bar 33 when the mechanism 4 is in neutral position and the negative parking brake is active. Figures 8a and 8b depicts the explosion view over the composition of the mechanism from various directions. Figure 9 depicts the mechanism within the housing in neutral position, when towing bar 33 is lowered.

The housing 1 is a welded item comprised of two pairs of parallel panels, i.e. horizontal 11 and 12, and vertical sides 13 and 14 comprised of panels 131, 132, 141 and 142. The vertical sides 13 and 14 have, in the same axis, round holes 13a and 14a that are embedded onto the shaft 4a, and round holes 13b and 14b that are embedded on the axis 2c. On the bottom panel 12, two parallel carriers 12b and 12c are fixed within the housing 1, whereby they have, in the same axis, the holes 12b' and 12c' where the axis 4h is embedded as well as the carrier 12d that has the hole 12d' where the spring 4i is attached. The geometrical axes of the pairs of holes 12b and 12c', as well as 13b and 14b parallel to each other. The upper panel 11 and the bottom panel 12 have welded sleeves 11a and 12a on the bore, through which the housing is embedded in a rotating manner onto the chassis of the passenger stairs. The axis 5a is welded onto the upper panel 11, whereby it carries the hook 5 of the vertical ore position. The steering cube 11b is screwed onto the housing 1, where it is fixed onto the bar for the steering of stairs during towing.

The bolt 7 of the mechanism 4 is connected to the towing bar 33 that is comprised of the carrier 331 of the towing bar and the towing bar 332. The carrier 331 of the towing bar is a welded item, comprised of two pairs of parallel panels, 331a and 331b as well as 331c and 331d, and the bolt 331g that is required for the lock-down of the bar in the vertical position. The panels 331a and 331b have bores where the screws 331e and 331f are installed for the lift of the lockout block 2a. The carrier 331 of the towing bar is installed onto the bolt 7 within the housing 1. The towing bar 332 that is welded from the pipe 332a and the towing eye 332b is fixed onto the carrier 331. The towing bar is screwed on in the implementation example, however, the connection may vary.

In the implementation example with the towing ore 33, the lockout block 2a may be lifted both with the handle 2b as well as by lifting the towing ore 33 in the vertical position. On both sides of the lockout block 2a, subsidence 22 and 22' are made symmetrically, whereas the screws 331e and 331f are strained against their edge upon the lift of the ore 33 and they lift the lockout block 2a. In a vertical position, the ore 33 can be fixed with the hook 5, whereby the block 2a remains lifted on screws 31e and 31f, and the parking brake 9 remains activated. Before towing, hook 5 needs to be lifted and the towing ore 33 lowered in a horizontal position; thereafter, the trailer can be coupled with the towing vehicle.

For shorter movements of the trailer without the towing vehicle, it is also possible to manually temporarily deactivate the negative parking brake 9. In a vertical position of the ore 33 when the ore is locked with the hook 5, the bar 332 at the towing eye 332b must be pulled in the forward driving direction. Upon the input of force on the towing bar 332, the bar acts as a lever, the axis of which represents the bolt 331g that is embedded in the seat 5b of the lockout 5. With the pull of the bar 332 at the towing eye 332b, the bolt 7 moves in the reverse driving direction, whereby the mechanism functions as described above in the example of reverse driving and it deactivates the parking brake 9. Since the lockout block 2a is lifted on screws 331 and 331f in the vertical position of the bar 332, the bolt 7 does not catch on the lockout groove 221, but rather remains freely movable. After the force of manual deactivation of the parking brake 9 onto the towing ore 33 ceases, the tensile spring 4i returns the entire mechanism 4 in neutral position, whereby the parking brake 9 is reactivated. When performing manual deactivation, the operator is set up straight, i.e. is an ergonomically more favourable position, it is easier for the operator to steer the trailer and have better overview over the surroundings.

The management of the parking brake on the vehicle is performed with the installed mechanism with any of the described towing devices automatically in the scope of the other activities by the operator during vehicle towing or pushing. In this manner, vehicle towing or pushing with the activated parking brake and leaving the vehicle unsupervised on a parking space with a deactivated parking brake is prevented. The operator is relieved of the responsibility for the proper functioning of the parking brake, thus eliminating the possibility of human error. The shortcomings of the previous system are eliminated, such as the possibilities of damage to the parking brake due to its improper use, the possibilities of damage to other vehicle components, the increased and uneven wear of tyres on wheels to which the parking brake is applied, and the possibility of injury to people, or damage to equipment and/or infrastructure due to an uncontrolled movement of stairs.

The parking brake management mechanism under the invention is suitable for use on all types of vehicles, trailers or vehicles with self-propulsion that have a parking brake or a set of components with the effect of a parking brake installed, whereby it was developed especially for the use on towing passenger stairs to be used at an airport.

## Claims

1. A parking brake management mechanism of towed vehicles includes a mechanism (4), a lockout (2), a towing device (3), a device with the function of a parking brake (9) and a connection (6) with which the towing device (3) and the lockout (2) are directly connected to the mechanism (4), and the device with the function of a parking brake (9) is connected to the mechanism (4) through a connection (6) where a shaft (4a) and an axis (4h) of the mechanism (4) and an axis (2c) of the lockout (2) are embedded onto a housing (1) or a stationary part of the towed vehicle in such manner that their axes are parallel to each other and the movement of a bolt (7) in the mechanism (4), which comprises connected handles (4b, 4c, 4d, 4e, 4f, 4g), the shaft (4a), axes (2c, 4b', 4g', 4g", 4h) and the bolt (7), is transferred onto an axis (4b') and from there on handles (4e and 4f) and handle (4g), and the created geometry by handles (4e, 4f, 4g) with axes (4g' and 4g") that are located each on its own side of the axis (4h) on the handle (4g) and with elongated excisions (4e' and 4f') on the handles (4e and 4f), on which the axes (4g' and 4g") move, allow the same direction of the rotation of the handle (4g) around the axis (4h), regardless of the direction of the movement of the bolt (7).

2. The mechanism according to claim 1 **characterized in that** a lockout block (2a) has lockouts (2) two grooves (221 and 222), with which the bolt (7) is caught in the extreme positions of the movement and that the former remain there until the lockout (2) is lifted, and a middle tooth (223) with which the block (2) can lean on the bolt (7) when the latter is in the interim, neutral position; that a handle (2b) is fixed to the lockout block (2a) with which the lockout (2) can be lifted.

3. The mechanism according to claim 1 or 2 **characterized in that** the device with the function of a parking brake (9) may be a parking brake or a set of components with the function of a parking brake, active in an unstrained state and has a deactivation mechanism installed that is set off by the connection (6).

4. The mechanism according to any of the previous claims **characterized in that** the connection (6) that connects the handle (4g) of the mechanism (4) with the deactivation mechanism of the device with the function of a parking brake (9), is of mechanical nature and is preferably a wire rope.

5. The mechanism according to any of the previous claims **characterized in that** the towing device (3) is a towing ore (33), comprised of a towing bar (332) and a bar carrier (331); that screws (331e and 331f) are installed on the bar carrier (331) that strain upon the lift of the towing ore (33) in subsidence (22 and 22') of the block (2a) and lift the latter; that the towing ore (33) may be lifted in a vertical position where it is locked with a lockout (5) that is fixed on the housing (1) or a stationary part of the towed vehicle.

6. The mechanism according to any of the previous claims **characterized in that** the towing device (3) is connected to the bolt (7) of the mechanism (4) and transfers thereon the movement that is caused in an axial direction of the towing device by the towing vehicle at the beginning of towing of pushing of the towed vehicle.

7. The mechanism according to any of the previous claims **characterized in that** the towing ore (33) that is locked in a vertical position with the lockout (5) allows manual release of the mechanism (4) with the pull of the towing bar (332), thus moving the bolt (7).

8. The mechanism according to any of the previous claims **characterized in that** the movement of the towing device (3) in the axial direction triggers functioning of the mechanism (4) that, through the connection (6), deactivates the device with the function of a parking brake (9), whereas the lockout (2) keeps the mechanism (4) in such position that the device with the function of a parking brake (9) remains deactivated.

9. The mechanism according to any of the previous claims **characterized in that** the lift of the lockout (2), the mechanism (4), the towing device (3), the connection (6) and the device with the function of a parking brake (9), due to the functioning of a spring (4i) return to neutral position where the device with the function of a parking brake (9) remains active.

10. The mechanism according to any of the previous claims **characterized in that** the housing (1) is a welded item comprised of two pairs of parallel panels, i.e. horizontal (11 and 12), and vertical sides (13 and 14) comprised of panels (131, 132, 141 and 142); that the vertical sides (13 and 14) have, in the same axis, round holes (13a and 14a) that are embedded onto the shaft (4a), and round holes (13b and 14b) that are embedded on the axis (2c); that two parallel carriers (12b and 12c) are fixed on the bottom panel (12) within the housing (1) that have holes (12b' and 12c') in the same axis, where the axis (4h) is embedded and the carrier (12d) that has a hole (12d') where the spring (4i) is fixed; that the geometrical axes of the pairs or holes (12b' and 12c', 13a and 14a and 13b and 14b) are parallel to each other; that the upper panel (11) and the bottom panel (12) have sleeves (11a and 12a) welded on the bore through which the housing is embedded in a rotating manner on the chassis of the passenger stairs; that the axis (5a) is welded on the upper panel (11) that carries the hook (5) of the vertical position of the ore; that a steering cube (11b) is screwed onto the housing (1) where the bar for steering the stairs during towing is fixed.
